# EUROPÄISCHE PATENTANMELDUNG

(11) **EP 2 348 061 A1**
(43) Veröffentlichungstag der Anmeldung: **27.07.2011**
(21) Anmeldenummer: 10000561.0
(22) Anmeldetag: 21.01.2010
(51) Int. Cl.: C08G 18/67, C08F 299/06

(54) **Verfahren zur Herstellung von wasseremulgierbaren Polyurethanpolyacrylat-Hybridsystemen**

(71) Anmelder: Bayer MaterialScience AG, 51368 Leverkusen (DE)
(72) Erfinder: Peerlings, Henricus Dr., 42699 Solingen (DE); Gertzmann, Rolf Dr., 51377 Leverkusen (DE)

(57) **Zusammenfassung**

Die vorliegende Erfindung betrifft Verfahren zur Herstellung von colöserfreien, wässrigen, anionische Polyurethanacrylat-Dispersionen, sowie deren Verwendung in Beschichtungsmitteln.

## Beschreibung

Die vorliegende Erfindung betrifft Verfahren zur Herstellung von colöserfreien, wässrigen, anionische Polyurethanacrylat-Dispersionen, sowie deren Verwendung in Beschichtungsmitteln.

Verfahren zur Herstellung von wasserdispergierbaren Urethan(meth)acrylaten sind aus der Literatur bekannt und beruhen meist auf der Herstellung des Polyurethans ausgehend von entsprechenden Prepolymeren in Gegenwart von Acrylat- und Styrolmonomeren, um im zweiten Schritt diese Monomere radikalisch zu polymerisieren. Ein entsprechendes Verfahren wird in EP-B 0309115 beschrieben.

Ein wesentlicher Nachteil dieses Verfahrens ist die Stabilität der Prepolymere in Anwesenheit von Acrylat- bzw. Styrol-Monomeren. Daher sollte der zweite Schritt der radikalischen Polymerisierung zeitnah nach der Herstellung des Prepolymers erfolgen.

Das Problem der mangelnen Stabilität konnte durch die Einführung von Polyurethanpolyacrylat-Hybridsystemen verringert werden. Solche Hybridsysteme sind dadurch gekennzeichnet, dass das Polyurethanprepolymer bereits acrylatgruppenhaltige Endgruppen aufweist. Dieses Prepolymer wird in einem zweiten Schritt mit Acrylat- bzw. Styrolmonomere zu einem Polyurethanpolyacrylat-Hybridsystem umgesetzt. Dieses Verfahren wird unter anderem in EP-B 0183119 und EP-A 0098752 beschrieben. Allerdings haben diese Systeme den Nachteil, dass nicht ausreichend filtrierbare Polyurethanpolyacrylat-Hybridsysteme entstehen können, insbesondere wenn das Polyurethan auf Polyetherdiolen als Diolkomponente basiert.

Aufgabe der vorliegenden Erfindung ist es daher, Verfahren zur Herstellung von polyetherbasierten Polyurethanpolyacrylaten zur Verfügung zu stellen, die sich problemlos herstellen lassen und eine gute Filtrierbarkeit aufweisen.

Es wurde nun überraschenderweise gefunden, daß die vorstehend genannte Aufgabe durch den Gegenstand der Erfindung gelöst wird.

Gegenstand der Erfindung sind daher Verfahren zur Herstellung von wässrigen Dispersionen enthaltend Polyurethanpolyacrylate, wobei in einem ersten Schritt
ein NCO-Prepolymer bestehend aus
ai) 20 bis 60 Gew.-% wenigstens eines Diisocyanates,
aii) 20-80 Gew.-% wenigstens eines Polyetherdiols mit einem zahlenmittleren Molekulargewicht von 600 bis 1600 g/mol,
aiii) 0 bis 30 g Gew.-% wenigstens eines Polymerdiols ausgewählt aus der Gruppe bestehend aus Polyesterpolyolen und Polycarbonatdiolen jeweils mit einem zahlenmittleren Molekulargewicht von 500 bis 3000 g/mol
aiv) 2 bis 12 Gew.-% wenigstens einer 2,2-Bis-(hydroxymethyl)-alkan-monocarbonsäure,
av) 0,1 bis 15 Gew.-% wenigstens eines hydroxyfunktionellen ethylenisch ungesättigten Monomers,
avi) 0 bis 15 Gew.-% wenigstens eines kurzkettigen Diols mit einem zahlenmittleren Molekulargewicht von 62 bis 400 g/mol,
avii) 0 bis 10 Gew-.% wenigstens eines tri- oder höherfunktionellen Alkohols mit einem zahlenmittleren Molekulargewicht von 62 bis 400 g/mol und
aviii) 0 bis 10 Gew.-% wenigstens eines monofunktionellen Alkohols mit einem zahlenmittleren Molekulargewicht von 32 bis 3500 g/mol,
mit
b) 0 bis 15 Gew.-% wenigstens eines Diamins mit einem zahlenmittleren Molekulargewicht von 60 bis 300 g/mol,
c) 0 bis 10 Gew.-% wenigstens eines monofunktionellen Amins mit einem zahlenmittleren Molekulargewicht von 32 bis 350 g/mol,
d) 0 bis 10 Gew.-% wenigstens eines tri- oder höherfunktionelle Amins mit einem zahlenmittleren Molekulargewicht von 60 bis 300 g/mol und
e) 0,1 bis 10 Gew.-% wenigstens eines Neutralisationsmittels
zu einem Polyurethan umgesetzt wird,
wobei sich die genannten Prozentangaben a) bis e) zu 100 % ergänzen,
und im zweiten Schritt ethylenisch ungestättigte Monomere f) zugegeben werden, wobei das Massenverhältnis der Summer der Masse der Monomere a) bis e) zur Masse des Monomers f) im Bereich zwischen 90:10 zu 10:90 liegt.

Vorzugsweise liegt das Massenverhältnis der Summer der Masse der Monomere a) bis e) zur Masse des Monomers f) im Bereich zwischen 40:60 zu 90:10.

Vorzugsweise wird in der Prepolymerstufe a) ein NCO-Gehalt von 65 bis 85 %, besonders bevorzugt von 70 % bis 80 %, des berechneten NCO-Gehalts eingestellt.

Vorzugsweise liegt die Säurezahl des Prepolymers im Bereich von 5 bis 40 mg KOH/g, besonderes bevorzugt im Bereich von 15 bis 35 mg KOH/g.

Die erfindungsgemäß hergestellten Polyurethan-Dispersionen sind Colöser-arm. Die erfindungsgemäß hergestellten Polyurethan-Dispersionen enthalten bevorzugt 0,0 bis 0,9 Gew.-%, besonders bevorzugt 0,0 bis 0,5 Gew.-%, ganz besonders bevorzugt 0,0 bis 0,4 Gew.-% an Colösem, bezogen auf die Gesamtmenge der Polyurethan-Dispersion.

Die erfindungsgemäß hergestellten Beschichtungsmittel sind Colöser-arm. Die erfindungsgemäß hergestellten Beschichtungsmittel enthalten bevorzugt 0,0 bis 0,9 Gew.-%, besonders bevorzugt 0,0 bis 0,5 Gew.-%, ganz besonders bevorzugt 0,0 bis 0,4 Gew.-% an Colösem, bezogen auf die Gesamtmenge des Beschichtungsmittels.

Colöser im Sinne der vorliegenden Erfindung sind polare organische Lösemittel. Vorzugsweise sind Colöser organische Lösemittel mit einem Hansen-Parameter im Bereich von 7.2 bis 16.0 (cal/cm³)^{0,5}, wie sie in "Polymer Handbooks", Eds. Brandrup, J.; Immergut, E.H.; Grulke, E.A., 4th Edition, John Wiley, New York, 1999, VII/Seite 675-711 veröffentlicht sind.

Bevorzugte Colöser im Sinne der vorliegenden Erfindung sind polare organische Lösemittel ausgewählt aus der Gruppe bestehend aus Aceton, Methylethylketon, Butyldiglykol, Dimethylsulfoxid, N-Ethylpyrrolidon, Dimethylformamid, Dimethylacetamid, N-Methylpyrrolidon, Butylenglykol und Dipropylenglykol-dimethylether.

Als Komponente ai) geeignete Diisocyanate des Molekulargewichtsbereichs 140 bis 400 weisen aliphatisch, cycloaliphatisch, araliphatisch und/oder aromatisch gebundene Isocyanatgruppen auf, wie z.B. 1,4-Diisocyanatobutan, 1;6-Diisocyanatohexan (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanato-methylcyclohexan (Isophorondiisocyanat, IPDI, 4,4'-Diisocyanato-dicyclohexylmethan, 1-Isocyanato-1-methyl-4(3)-isocyanatomethylcyclohexan, Bis-(isocyanatomethyl)-norboman, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt als Komponente ai) sind Diisocyanate des Molekulargewichtsbereichs 140 bis 400 mit aromatisch gebundenen Isocyanatgruppen.

Bevorzugt wird die Komponente a)i) in einer Menge von 20 bis 60 Gew.-%, besonders bevorzugt in einer Menge von 30 bis 55 Gew.-%, bezogen auf die Summe aller Komponenten a), b), c), d) und e) verwendet.

Weiterhin geeignet als Diisocyanate ai) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994), S. 185 - 200 beschrieben sind.

Als Komponente aii) geeignete Polyetherdiole sind in an sich bekannter Weise durch Alkoxylierung geeigneter Startermoleküle zugänglich (z. B. in Ullmanns Enzyklopädie der technischen Chemie, 4. Auflage, Band 19, Verlag Chemie, Weinheim S. 31-38).

Die Herstellung der Polyetherdiole erfolgt in der Regel durch Alkoxylierung der Startmoleküle in Gegenwart eine Katalysators, beispielsweise eines Alkali- oder Erdalkalihydroxids, -oxids, -carbonats oder -hydrogencarbonats.

Die Herstellung der Polyetherdiole kann auch mit Hilfe von Multimetallcyanidverbindungen, häufig auch als DMC-Katalysatoren bezeichnet, erfolgen, die seit langem bekannt und vielfach in der Literatur beschrieben sind, beispielsweise in US 3,278,457 und in US 5,783,513.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Die Alkylenoxide Ethylenoxid und Propylenoxid können in beliebiger Reihenfolge oder auch im Gemisch bei der Alkoxylierungsreaktion eingesetzt werden können.

Als Komponente aii) geeignete Polyetherdiole sind ebenfalls die in der Polyurethanchemie an sich bekannten Polytetramethylenglykolpolyether, die z.B. über Polymerisation von Tetrahydrofuran durch kationische Ringöffnung hergestellt werden können. Weiterhin geeignet als Komponente aii) ist Polypropylenoxid.

Das mittlere Molekulargewicht der Polyetherdiole aii) beträgt vorzugsweise 650 g/mol bis 1500 g/mol.

Besonders bevorzugt als Komponente aii) sind Polytetramethylenglykolpolyether.

Als Komponente aiii) sind Polyesterpolyole geeignet. Polyesterpolyole sind die bekannten Polykondensate aus Di- sowie gegebenenfalls Poly(Tri,Tetra)olen und Di- sowie gegebenenfalls Poly(Tri,Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyesterpolyole verwendet werden.

Beispiele für geeignete Diole sind Ethylenglykol, Butylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopentylglykolester. Gegebenenfalls können Polyole sind wie beispielsweise Trimethylolpropan, Glycerin, Erythrit, Pentaerythrit, Trimethylolbenzol oder Trishydroxyethylisocyanurat mitverwendet werden.

Als Dicarbonsäuren kommen beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure in Frage. Die möglichen Anhydride dieser Säuren sind ebenfalls geeignet. Für die Belange der vorliegenden Erfindung werden die Anhydride infolgedessen durch den Ausdruck "Säure" umfasst. Es können auch Monocarbonsäuren, wie Benzoesäure, Hexancarbonsäure oder Fettsäuren verwendet werden, vorausgesetzt, dass die mittlere Funktionalität des Polyols grösser 2 ist. Gesättigte aliphatische oder aromatische Säuren sind bevorzugt, wie Adipinsäure oder Isophthalsäure. In kleineren Mengen können Polycarbonsäuren wie Trimellitsäure eingesetzt werden. Hydroxycarbonsäuren, die als Reaktionsteilnehmer bei der Herstellung eines Polyesterpolyols mit endständiger HydroxylGruppe verwendet werden können, sind beispielsweise Hydroxycapronsäure, Hydroxybuttersäure, Hydroxydecansäure oder Hydroxystearinsäure. Geeignete Lactone sind z.B. ε-Caprolacton oder Butyrolacton.

Ebenfalls als Komponente aiii) sind Polycarbonatdiole geeignet. Die in Frage kommenden Hydroxyl-Gruppen aufweisenden Polycarbonatdiole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3-und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, besonders bevorzugt solche, die neben endständigen OH-Gruppen Ether- oder Estergruppen aufweisen. Die Hydroxylpolycarbonate sind bevorzugt linear. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid oder 1,3,4,6-Dianhydrohexite.

Bevorzugt wird die Komponente a)iii) in einer Menge von 0 bis 30 Gew.-%, besonders bevorzugt in einer Menge von 0 bis 20 Gew.-%, bezogen auf die Summe aller Komponenten a), b), c), d) und e) verwendet.

Das zahlenmittlere Molekulargewicht der Polyole der Komponente a)iii) liegt bevorzugt zwischen 500 und 3000, besonders bevorzugt zwischen 500 und 2000 g/mol,

Bei den Ausgangskomponenten a)iv) handelt es sich bevorzugt um 2,2-Bis-(hydroxymethyl)-alkanmonocarbonsäuren mit insgesamt 5 - 8 Kohlenstoffatomen, d.h. Verbindungen der allgemeinen Formel (I), 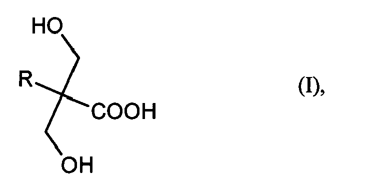 in welcher
R für einen Alkylrest mit 1 - 4 Kohlenstoffatomen steht.

Bevorzugt steht R für einen unsubstituierten Alkylrest mit 1 - 4 Kohlenstoffatomen.

Ganz besonders bevorzugt ist die Komponente a)iv) 2,2-Dimethylolpropionsäure.

Bevorzugt wird die Komponente a)iv) in einer Menge von 2 bis 12 Gew.-%, besonders bevorzugt in einer Menge von 4 bis 10 Gew.%, bezogen auf die Summe aller Komponenten a), b), c), d) und e) verwendet.

Als Komponente av) geeignete hydroxyfunktionelle Monomere sind z.B. Hydroxyethylmethacrylat, Hydroxypropylmethacrylat, Hydroxyethylacrylat, Hydroxypropylacrylat, Hydroxybutylacrylat, Hydroxybutylmethacrylat oder Alkylenoxideinheiten enthaltende Hydroxymonomere, wie z.B. Additionsprodukte von Ethylenoxid, Propylenoxid oder Butylenoxid an (Meth)acrylsäure, (Meth)acrylsäurehydroxyester oder (Meth)allylalkohol, sowie die Mono- und Diallylether von Trimethylolpropan, Glycerin oder Pentaerythrit. Besonders bevorzugt als Komponente av) sind Monomere ausgewählt aus der Gruppe bestehen aus Hydroxyethylacrylat, Hydroxyethylmethacrylat, Hydroxypropylacrylat, Hydroxypropylmethacrylat, Hydroxybutylacrylat und Hydroxybutylmethacrylat.

Bevorzugt wird die Komponente a)v) in einer Menge von 0,1 bis 15 Gew.%, besonders bevorzugt in einer Menge von 1 bis 10 Gew.-%, bezogen auf die Summe aller Komponenten a), b), c), d) und e) verwendet.

Als Ausgangskomponente a)vi) kommen kurzkettigen Diole mit einem zahlenmittleren Molekulargewicht im Bereich von 62 und 400 g/mol in Betracht. Besonders bevorzugt als Komponente a)vi) sind Verbindungen ausgewählt aus der Gruppe bestehend aus 1,4-Butandiol, 1,4 Cyclohexandimethanol und 1,6-Hexandiol. Bevorzugt wird die Komponente a)vi) in einer Menge von 0 bis 15 Gew.%, besonders bevorzugt in einer Menge von 0 bis 12 Gew.-%, bezogen auf die Summe aller Komponenten a), b), c), d) und e) verwendet.

Als Komponente avii) kommen tri- oder höherfunktionelle Alkohole mit einem zahlenmittleren Molekulargewicht im Bereich von 62 und 400 g/mol in Betracht. Besonders bevorzugt als Komponente a)vii) sind Verbindungen ausgewählt aus der Gruppe bestehend aus Trismethylolpropan, Trismethyolethan, Glycerin, Bis(trismethyolpropan), Bis(trismethyolethan), Pentaerythritol und Bis(pentaerythritol). Bevorzugt wird die Komponente a)vii) in einer Menge von 0 bis 10 Gew.-% besonders bevorzugt in einer Menge von 0 bis 5 Gew.-%, bezogen auf die Summe aller Komponenten a), b), c), d) und e) verwendet.

Als Ausgangskomponente a)viii) kommen Alkohole mit einem Molekulargewicht im Bereich von 32 bis 3500 g/mol in Betracht. Vorzugsweise werden Alkohole ausgewählt aus der Gruppe bestehend aus Methanol, Ethanol, Butanol, Hexanol, 2-Ethylhexanol, Oktanol und Dodecanol verwendet. Ebenfalls bevorzugt wird monofunktionelles Polyethylenglykol verwendet. Bevorzugt wird die Komponente a)viii) in einer Menge von 0 bis 10 Gew.-%, besonders bevorzugt in einer Menge von 0 bis 8 Gew.-%, bezogen auf die Summe aller Komponenten a), b), c), d) und e) verwendet.

Als Komponente b) können alle aliphatischen und/oder cycloaliphatischen Verbindungen verwendet werden, die zwei gegenüber Isocyanaten reaktive Aminogruppen tragen und eine Molekulargewicht im Bereich von 60 bis 300 g/mol aufweisen. Besonders bevorzugt wird die Komponente b) ausgewählt aus der Gruppe bestehend aus Ethylendiamin, Propylendiamin, Butylendiamin, Hexamethylendiamin, Isophorondiamin, Piperazin, p-Xylylendiamin, 4,4'-Diamino-dicyclohexylmethan und 4,4' -Diarnino-3,3'-dimethyldicyclohexylmethan. Ebenfalls besonders bevorzugt wird die Komponente b) ausgewählt aus der Gruppe bestehend aus N-(2-Aminoethyl)-ß-alanin, 2-(2-Amino-ethylamino)-ethansulfonsäure, Ethylendiamin-propyl- oder -butylsulfonsäure und 1,2- oder 1,3-Propylendiamin-ß-ethylsulfonsäure. Ganz besonders bevorzugt wird die Komponente b) ausgewählt aus der Gruppe bestehend aus Ethylendiamin, Isophorondiamin und 4,4'-Diamino-dicyclohexylmethan.

Als Diamine im Sinne der Erfindung sind auch Hydrazin, Hydrazinhydrat und substituierte Hydrazine zu verstehen, wie z.B. N-Methylhydrazin, N,N'-Dimethylhydrazin und deren Homologe sowie Säuredihydrazide, wie z.B. Adipinsäuredihydrazid, Semicarbazidoalkylenhydrazide, wie z.B. β-Semicarbazidopropionsäurehydrazid, Semicarbazidoalkylencarbazinester, wie z.B. 2-Semicarbazidoethylcarbazinester oder auch Aminosemicarbazid-Verbindungen, wie z.B. (3-Aminoethylsemicarbazido-carbonat.

Bevorzugt wird die Komponente b) in einer Menge von 0 bis 15 Gew.-%, besonders bevorzugt in einer Menge von 0 bis 10 Gew.-%, bezogen auf die Summe aller Komponenten a), b), c), d) und e) verwendet.

Als Komponente c) kommen monofunktionelle Amine mit einem zahlenmittleren Molekulargewicht im Bereich von 32 bis 300 g/mol in Betracht, wie primäre Amine ausgewählt aus der Gruppe bestehend aus Methylamin, Ethylamin, n-Propylamin, n-Butylamin, n-Octylamin, Laurylamin, Stearylamin, Isopropylamin und Cyclohexylamin, sowie sekundäre Amine ausgewählt aus der Gruppe bestehend aus Dimethylamin, Diethylamin, Diisopropylamin, Dibutylamin und Piperidin in Betracht. Besonders bevorzugt werden sekundäre Amine wie Dibutylamin eingesetzt. Selbstverständlich können aus Mischungen aus diesen zum Einsatz kommen. Bevorzugt wird die Komponente c) in einer Menge von 0 bis 10 Gew.-%, besonders bevorzugt in einer Menge von 0 bis 5 Gew.-%, bezogen auf die Summe aller Komponenten a), b), c) und d), verwendet.

Als Komponente d) kommen tri- oder höherfunktionelle Amine mit einem zahlenmittleren Molekulargewicht im Bereich von 32 bis 300 g/mol in Betracht, wie Diethylentriamin. Bevorzugt wird die Komponente d) in einer Menge von 0 bis 10 Gew.-%, besonders bevorzugt in einer Menge von 0 bis 5 Gew.-%, bezogen auf die Summe aller Komponenten a), b), c), d) und e) verwendet.

Als Neutralisationsmittel e) sind zum Beispiel Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin, N-Ethyl-diisopropylamin und Gemische daraus geeignet. Bevorzugt wird die Komponente e) in einer Menge von 0,1 bis 10 Gew.-%, besonders bevorzugt in einer Menge von 0,1 bis 8 Gew.-%, bezogen auf die Summe aller Komponenten a), b), c), d) und e) verwendet.

Als Komponente f) kommen ungesättigte radikalisch polymerisierbare Verbindungen mit Carboxyl-/Carboxylatgruppen oder Sulfonsäure-/Sulfonatgruppen in Frage. Beispiele für solche säurefunktionelle Monomere sind z.B. Acrylsäure, Methacrylsäure, β-Carboxyethylacrylat, Crotonsäure, Fumarsäure, Maleinsäure(anhydrid), Itaconsäure, Monoalkylester zweibasiger Säuren/Anhydride wie z.B. Maleinsäuremonoalkylester, sowie die in der WO-A 00/39181 (S. 8, Z. 13 ^{_} S. 9, Z. 19) beschriebenen Sulfonsäure-/Sulfonatgruppen enthaltenden olefinisch ungesättigten Monomere, unter denen beispielhaft 2-Acrylamido-2-methylpropansulfonsäure genannt sei.

Ebenfalls geeignete Monomere f) sind z.B. (Meth)acrylsäurester mit C₁ bis C₁₈-Kohlenwasserstoffresten im Alkoholteil, beispielsweise Methylacrylat, Ethylacrylat, n-Butylacrylat, iso-Butylacrylat, tert.-Butylacrylat, 2-Ethylhexylacrylat, Methylmethacrylat; Ethylmethacrylat, Butylmethacrylat, 2-Ethylhexylmethacrylat, Hexylacrylat, Laurylacrylat, cyclische Kohlenwasserstoffreste enthaltende Monomere wie Cyclohexyl(meth)acrylat, mit Alkylgruppen am Ring substituierte Cyclohexyl(meth)acrylate, Isobornyl(meth)acrylat oder Norbornyl(meth)acrylat, aromatische Gruppen enthaltende Monomere wie Styrol, Vinyltoluol oder α-Methylstyrol aber auch Vinylester, Alkylenoxideinheiten enthaltende Vinylmonomere wie z.B. Kondensationsprodukte von (Meth)acrylsäure mit Oligoalkylenoxidmonoalkylethem sowie Monomere mit weiteren funktionellen Gruppen wie z.B. Epoxygruppen, Alkoxysilylgruppen, Harnstoffgruppen, Urethangruppen, Amidgruppen oder Nitrilgruppen. Bevorzugt werden als Komponente f) Methylmethacrylat, n-Butylacrylat, n-Butylmethacrylat, 2-Ethylhexylacrylat, Isobornylacrylat, Isobomylmethacrylat oder Styrol eingesetzt.

Die Umsetzung des Prepolymers a) mit ethylenisch ungesättigten Monomeren erfolgt vorzugsweise in Anwesenheit von Redox-Systemen g) wie z.B. Eisen-EDTA Komplexe in Kombination mit Rongalit C oder Isoascorbinsäure in Kombination mit dem Eisen-EDTA-Komplex.

Die Umsetzung des Prepolymers a) mit ethylenisch ungesättigten Monomeren erfolgt vorzugsweise in Anwesenheit von Initiatoren h) wie z.B. Ammoniumpersulfat, organische Peroxide wie z.B. Di-tert.-Butylperoxid oder tert.-Butylperoxy-2-ethylhexanoat sowie Azoverbindungen. Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der unten näher beschriebenen Art eingesetzt werden.

In einer bevorzugten Ausführungsform werden die Komponente aii) bis aviii) vorgelegt und das Diisocyanat ai) zugegeben (one-shot-Verfahren). Diese Reaktion wird bevorzugt in Gegenwart eines geeigneten niedrigsiedenden Lösungsmittels wie z.B. Aceton durchgeführt. Die Komponente b) bis e) können entweder zusammen oder getrennt zugegeben werden.

Die Polymeraufbaureaktion, d.h. die Herstellung des Präpolymers a), wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u. a. gebräuchliche Katalysatoren).

Durch Zugabe von Wasser und anschließendem Entfernen des eingesetzten Acetons durch Destillation wird die gewünschte Festkörperkonzentration eingestellt. Polyurethanpolyharnstoffdispersionen, die nach dem erfindungsgemäßen Verfahren gewonnen werden, weisen bevorzugt einen Gehalt an Feststoff im Bereich von 20 - 60 Gew.-%, besonders bevorzugt im Bereich von 25 ^{_} 40 Gew.-%, in Wasser auf.

Die erfindungsgemäß hergestellte Polyurethandispersion weist Teilchen mit einem mittleren Teilchendurchmesser bevorzugt im Bereich von 20 - 1000 nm, besonders bevorzugt im Bereich von 40 - 500 nm auf, gemessen mit der Methode der dynamischen Lichtstreuung nach ISO 13320-1.

Die pH-Werte der weißen, erfindungsgemäß hergestellten, lagerstabilen Polyurethanpolyharnstoffdispersionen liegen im Bereich von 6 - 9.

Die Umsetzung dieses Polyurethanpolyharnstoffs zu dem entsprechenden Polyurethanpolyharnstoffpolyacrylats erfolgt bevorzugt durch Vorlage des Polyurethanpolyharnstoffes und Zugabe der ethylenisch ungesättigten Monomere f) und des Redoxsystems g). Bei einer geeigneten Temperatur, bevorzugt zwischen 10 und 60°C, wird der Initiator h) zugegeben und nach erfolgter Zugabe wird die Reaktionsmischung noch einige Stunden bei 50°C nachgerührt.

Zur Herstellung von Beschichtungsmitteln werden die erfmdungsgemässen Polyurethan-Dispersionen entweder allein oder in Kombination mit anderen wässrigen Bindemitteln eingesetzt.

Solche wässrigen Bindemittel können z.B. aus Polyester-, Polyacrylat, Polyepoxid- oder Polyurethanpolymeren aufgebaut sein. Auch die Kombination mit strahlenhärtbaren wässrigen Bindemitteln ist möglich. Weiterhin ist es möglich, polymerisierbare, vinylisch ungesättigte Monomere in Gegenwart der erfindungsgemässen Polyurethan-Dispersionen zu polymerisieren, um zu Hybriddispersionen zu gelangen. Hierzu wird in Gegenwart der Polyurethandispersion eine der Emulsionspolymerisation von olefinisch ungesättigten Monomeren wie Estern und/oder Amiden aus (Meth-)acrylsäure und Alkoholen mit 1 bis 18 C-Atomen, Styrol, Vinylestern oder Butadien durchgeführt. Die Monomere können funktionelle Gruppen wie Hydroxyl- oder Acetoaceto- xygruppen sowie eine oder mehrere olefinische Doppelbindungen enthalten.

Gegenstand der vorliegenden Erfindung sind somit auch physikalisch trocknende Beschichtungsmittel, enthaltend die erfmdungsgemässen Polyurethandispersionen.

Weiterhin ist es möglich vor der Applikation des Beschichtungsmittels, enthaltend die erfindungsgemässe Polyurethandispersion, Vernetzer zuzusetzen. Hierfür geeignet sind bevorzugt hydrophile und hydrophobe Polyisocyanatvernetzer mit freien NCO Gruppen.

Die erfmdungsgemäss hergestellten Polyurethan-Dispersionen werden bevorzugt als Bindemittel in Beschichtungsmittel verwendet. Beschichtungen auf Basis der erfindungsgemässen Polyurethan- Dispersionen können auf beliebige Substrate aufgebracht werden, z. B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Beschichtung von Holz- und Kunststoffböden sowie mineralischen Boeden.

Gegenstand der vorliegenden Erfindung ist auch die Verwendung der erfindungsgemässen Polyurethandispersionen zur Herstellung von Klarlacken, pigmentierten oder nicht pigmentierten Beschichtungen. Geeignete Substrate sind mineralische bzw. keramisch Untergründe und Materialien, Beton, Hartfaserwerkstoffe, metallische Untergründe, Kunststoffe, Papier, Pappe, Verbundwerkstoffe, Glas, Porzellan, Textil und/oder Leder. Bevorzugte Substrate sind hölzerne und holzartige Substrate wie z.B. Möbel, Holzfaserplatten, Parkett, Fensterrahmen, Türen, Paneelen, Bretter oder Balken.

### Beispiele

In folgenden verwendeten Abkürzungen werden verwendet.
- Terathane® XXXX: PolyTHF mit einem mittleren Molekulargewicht von XXXX g/mol, wobei XXXX: 250, 650, 1000 oder 2000 sein kann. Produkte der Firma Invista Inc.
- LP112: Polypropylenoxid mit einem mittleren Molekulargewicht von 1000 g/mol. Produkt der Firma Bayer MaterialScience AG.
- DMPS: Dimethyolpropionsäure
- HDO: 1,6-Hexandiol
- HEMA: Hydroxyethylmethacrylat
- T80®: Desmodur T80, Toluendiisocyanat, Produkt der Firma Bayer MaterialScience AG.
- PU 1806®: Methylen-Diisocyanatophenyl, Mischung aus 4,4' und 2,4' Isomeren. Produkt der Firma Bayer MaterialScience AG
- Simulsol® P23: Nicht-ionischer Surfactant. Produkt der Firma Seppic
- HyHy: Hydrazin hydrat
- TEA: Triethylamin
- Sty: Styrol
- MMA: Methylmethacrylat
- 2-EHA: 2-Ethylhexylacrylat
- Fe(II): Eisen(II)Sulfat Heptahydrat
- Trilon B®: EDTA-Tetranatriumsalz, Produkt der Firma BASF AG
- Rongalit C®: Reduktionsmittel auf Basis eines Natriumsalzes eines Sulfinsäurderivates. Produkt der Firma BASF AG.
- TBHP: Tert-Butyl-Hydroperoxid

Die Messung der Viskosität erfolgt in Übereinstimmung mit DIN 3219.

### Beispiel 1: Vergleich

### Polyurethanpolyharnstoffvorstufe:

In einem 2000 mL Kolben wurden 33 g DMPS mit 143 g Terathane® 250 und 15 g HEMA vorgelegt und 138 g Aceton wurde zugegeben. Zu der gerührten Mischung wurde eine Mischung aus 58 g T80 und 166 g PU 1806 zugegeben und nach erreichen der Exothermie übernacht unter Rückfluss gerührt bis der NCO-Wert 1,30% betrug (Theorie: 1,88%). Dann wurde eine weitere Menge Aceton (40 g) und 2,1 g Simulsol® P23 zugegeben und homogenisiert. Dann wurden 500 g von dieser Mischung in einer auf 30°C temperierten wässrigen Vorlage, welche aus einer Mischung von 1,3 g Hydrazinhydrat und 20 g TEA in 695 g Wasser besteht, dispergiert. Dann wurde unter Vakuum (100 mbar) und einer Temperatur von 40°C das Aceton abdestilliert. Es entstand dabei ein ein verstipptes, nicht filtrierbares Material.

### Beispiel 2: Vergleich

### Polyurethanpolyharnstoffvorstufe:

In einem 2000 mL Kolben wurden 31 g DMPS mit 40 g Terathane® 250 und 103 g Terathane®650 mit 26 g HDO und 14 g HEMA vorgelegt und 141 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,36% betrug (Theorie: 1,7%). Dann wurde eine weitere Menge Aceton (40 g) und 2,1 g Simulsol® P23 zugegeben und homogenisiert. Dann wurden 500 g von dieser Mischung in einer auf 30°C temperatierten wässrigen Vorlage, welche aus einer Mischung von 1,1 g Hydrazinhydrat und 18 g TEA in 696 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 28,2% (verdünnt) |
| Mittlere Teilchengröße:84 nm | |
| pH (10%-ig verdünnt): 8,81 | |
| Viskosität (D=1000 1/s): | 35 mPa.s |
| Stippentest: | 1 |

### Polyurethanpolyharnstoffpolyacrylat:

In einem 2000 mL Kolben wurde das Polyurethanpolyharnstoff wie oben beschrieben vorgelegt (819 g) und mit Wasser verdünnt (20 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,6% |
| Mittlere Teilchengröße:89 nm | |
| pH (10%-ig verdünnt): 8,72 | |
| Viskosität (D=1000 1/s): | 11 mPa.s |
| Stippentest: | 3 |

### Beispiel 3: Erfindungsgemäß

### Polyurethanpolyharnstoffvorstufe:

In einem 2000 mL Kolben wurden 31 g DMPS mit 148 g Terathane® 650 mit 37 g HDO und 14 g HEMA vorgelegt und 147 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,50% betrug (Theorie: 1,7%). Dann wurde eine weitere Menge Aceton (42 g) und 2,2 g Simulsol® P23 zugegeben und homogenisiert. Dann wurden 500 g von dieser Mischung in einer auf 30°C temperatierten wässrigen Vorlage, welche aus einer Mischung von 1,23 g Hydrazinhydrat und 17 g TEA in 697 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 28,9% (verdünnt) |
| Mittlere Teilchengröße: 108 nm | |
| pH (10%-ig verdünnt): 8,75 | |
| Viskosität (D=1000 1/s): | 56 mPa.s |
| Stippentest: | 2 |

### Polyurethanpolyharnstoffpolyacrylat:

In einem 2000 mL Kolben wurde das Polyurethanpolyharnstoff wie oben beschrieben vorgelegt (799 g) und mit Wasser verdünnt (40 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 34,0% |
| Mittlere Teilchengröße:99 nm | |
| pH (10%-ig verdünnt): 8,72 | |
| Viskosität (D=1000 1/s): | 9 mPa.s |
| Stippentest: | 1-2 |

### Beispiel 4: Erfindungsgemäß

### Polyurethanpolyharnstoffvorstufe:

In einem 2000 mL Kolben wurden 31 g DMPS mit 59 g Terathane® 650 und 91 g Terathane® 1000 mit 42 g HDO und 14 g HEMA vorgelegt und 149 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,30% betrug (Theorie: 1,6%). Dann wurde eine weitere Menge Aceton (42 g) und 2,2 g Simulsol® P23 zugegeben und homogenisiert. Dann wurden 500 g von dieser Mischung in einer auf 30°C temperatierten wässrigen Vorlage, welche aus einer Mischung von 1,1 g Hydrazinhydrat und 17 g TEA in 697 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 28,8% (verdünnt) |
| Mittlere Teilchengröße:74 nm | |
| pH (10%-ig verdünnt):8,73 | |
| Viskosität (D=1000 1/s): | 19 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (803 g) und mit Wasser verdünnt (36 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,3% |
| Mittlere Teilchengröße:76 nm | |
| pH (10%-ig verdünnt): 8,71 | |
| Viskosität (D=1000 1/s): | 14 mPa.s |
| Stippentest: | 1-2 |

### Beispiel 5: Erfindungsgemäß

### Polyurethanpolyharnstoffvorstufe:

In einem 2000 mL Kolben wurden 32 g DMPS mit 150 g Terathane® 1000 mit 44 g HDO und 14 g HEMA vorgelegt und 150 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,44% betrug (Theorie: 1,6%). Dann wurde eine weitere Menge Aceton (43 g) und 2,3 g Simulsol® P23 zugegeben und homogenisiert. Dann wurden 500 g von dieser Mischung in einer auf 30°C temperatierten wässrigen Vorlage, welche aus einer Mischung von 1,26 g Hydrazinhydrat und 18 g TEA in 697 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 29,6% (verdünnt) |
| Mittlere Teilchengröße:90 nm | |
| pH (10%-ig verdünnt): 8,63 | |
| Viskosität (D=1000 1/s): | 45 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (780 g) und mit Wasser verdünnt (59 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,4% |
| Mittlere Teilchengröße:82 nm | |
| pH(10%-ig verdünnt): 8,90 | |
| Viskosität (D=1000 1/s): | 29 mPa.s |
| Stippentest: | 1-2 |

### Beispiel 6: Erfindungsgemäß

### Polyurethanpolyharnstoffvorstufe:

In einem 2000 mL Kolben wurden 32 g DMPS mit 150 g Terathane® 1000 mit 44 g HDO in 150 g Aceton vorgelegt. Zu der gerührten Mischung wurde eine Mischung aus 54 g T80 und 156 g PU 1806 zugegeben und nach erreichen der Exothermie übernacht unter Rückfluss gerührt bis der NCO-Wert 1,91% betrug (Theorie: 2,3%). Dann wurde 14 g HEMA zugegeben und ebenfalls wieder Übernacht unter Rückfluss gerührt bis der NCO-Wert 1,49% betrug (Theorie: 1,6%). Dann wurde eine weitere Menge Aceton (43 g) und 2,3 g Simulsol® P23 zugegeben und homogenisiert. Dann wurden 500 g von dieser Mischung in einer auf 30°C temperatierten wässrigen Vorlage, welche aus einer Mischung von 1,21 g Hydrazinhydrat und 18 g TEA in 697 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 33,7% (unverdünnt) |
| Mittlere Teilchengröße:88 nm | |
| pH (10%-ig verdünnt): 8,73 | |
| Viskosität (D=1000 1/s): | 45 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (686 g) und mit Wasser verdünnt (153 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,2% |
| Mittlere Teilchengröße:82 nm | |
| pH (10%-ig verdünnt): 8,63 | |
| Viskosität (D=1000 1/s): | 14 mPa.s |
| Stippentest: | 2 |

### Beispiel 7: Erfindungsgemäß

### Polyurethanpolyharnstoffvorstufe:

In einem 2000 mL Kolben wurden 31 g DMPS mit 153 g LP112 mit 45 g HDO und 14 g HEMA vorgelegt und 150 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,38% betrug (Theorie: 1,6%). Dann wurde eine weitere Menge Aceton (43 g) und 2,3 g Simulsol® P23 zugegeben und homogenisiert. Dann wurden 500 g von dieser Mischung in einer auf 30°C temperatierten wässrigen Vorlage, welche aus einer Mischung von 1,12 g Hydrazinhydrat und 17 g TEA in 697 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 28,0% (verdünnt) |
| Mittlere Teilchengröße: 114 nm | |
| pH (10%-ig verdünnt): 8,79 | |
| Viskosität (D=1000 1/s): | 74 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (825 g) und mit Wasser verdünnt (13 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,4% |
| Mittlere Teilchengröße:98 nm | |
| pH (10%-ig verdünnt): 8,80 | |
| Viskosität (D=1000 1/s): | 13 mPa.s |
| Stippentest: | 1-2 |

### Beispiel 8: Erfindungsgemäß

### Polyurethanpolyharnstoffvorstufe:

In einem 2000 mL Kolben wurden 31 g DMPS mit 52 g Terathane® 1000 und 104 g Terathane®2000 mit 51 g HDO und 14 g HEMA vorgelegt und 154 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,33% betrug (Theorie: 1,6%). Dann wurde eine weitere Menge Aceton (44 g) und 2,3 g Simulsol® P23 zugegeben und homogenisiert. Dann wurden 500 g von dieser Mischung in einer auf 30°C temperatierten wässrigen Vorlage, welche aus einer Mischung von 1,08 g Hydrazinhydrat und 17 g TEA in 698 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 29,4% (verdünnt) |
| Mittlere Teilchengröße:68 nm | |
| pH (10%-ig verdünnt): 8,83 | |
| Viskosität (D=1000 1/s): | 32 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (785 g) und mit Wasser verdünnt (54 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,1% |
| Mittlere Teilchengröße:65 nm | |
| pH (10%-ig verdünnt): 8,88 | |
| Viskosität (D=1000 1/s): | 25 mPa.s |
| Stippentest: | 1-2 |

### Beispiel 9: Vergleichsbeispiel

### Polyurethanpolyharnstoffvorstufe:

In einem 2000 mL Kolben wurden 31 g DMPS mit 158 g Terathane® 2000 und 54 g HDO und 14 g HEMA vorgelegt und 155 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,31% betrug (Theorie: 1,6%). Dann wurde eine weitere Menge Aceton (44 g) und 2,3 g Simulsol® P23 zugegeben und homogenisiert. Dann wurden 500 g von dieser Mischung in einer auf 30°C temperatierten wässrigen Vorlage, welche aus einer Mischung von 1,06 g Hydrazinhydrat und 17 g TEA in 698 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 28,9% (verdünnt) |
| Mittlere Teilchengröße:70 nm | |
| pH (10%-ig verdünnt): 8,91 | |
| Viskosität (D=1000 1/s): | 28 mPa.s |
| Stippentest: | 1-2 |

### Polyurethanpolyharnstoffpolyacrylat:

In einem 2000 mL Kolben wurde das Polyurethanpolyharnstoff wie oben beschrieben vorgelegt (800 g) und mit Wasser verdünnt (39 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 35,2% |
| Mittlere Teilchengröße:68 nm | |
| pH (10%-ig verdünnt): 8,82 | |
| Viskosität (D=1000 1/s): | 27 mPa.s |
| Stippentest: | 3 |

### Beispiel 10: Erfindungsgemäß

### Polyurethanpolyharnstoffvorstufe:

In einem 2000 mL Kolben wurden 31 g DMPS mit 80 g Terathane® 1000, 80 g Desmophen C2200 und 43 g HDO und 13 g HEMA vorgelegt und 155 g Aceton wurde zugegeben. Zu der gerührten Mischung wurde eine Mischung aus 54 g T80 und 156 g PU 1806 zugegeben und nach erreichen der Exothermie übernacht unter Rückfluss gerührt bis der NCO-Wert 1,39% betrug (Theorie: 1,6%). Dann wurde eine weitere Menge Aceton (44 g) und 2,3 g Simulsol® P23 zugegeben und homogenisiert. Dann wurden 500 g von dieser Mischung in einer auf 30°C temperatierten wässrigen Vorlage, welche aus einer Mischung von 1,13 g Hydrazinhydrat und 17 g TEA in 698 g Wasser besteht, dispergiert. Dann wurde unter Vakuum (100 mbar) und einer Temperatur von 40°C das Aceton abdestilliert. Es entstand dabei ein Material mit folgenden Eigenschaften:

| | |
|---|---|
| Feststoffgehalt: | 30,2% (verdünnt) |
| Mittlere TeilchengröBe:68 nm | |
| pH (10%-ig verdünnt): 8,94 | |
| Viskosität (D=1000 1/s): | 43 mPa.s |
| Stippentest: | 1 |

### Polyurethanpolyharnstoffpolyacrylat:

In einem 2000 mL Kolben wurde das Polyurethanpolyharnstoff wie oben beschrieben vorgelegt (766 g) und mit Wasser verdünnt (73 mL). Dann wurden innerhalb von 5 Minuten eine Mischung bestehend aus Styrol (71 g), MMA (32 g) und 2-EHA (17 g) zugegeben und direkt danach 28,8 von einer wässrigen Mischung bestehend aus 1,3 g Rongalit® C, 215 mg Trilon B und 10,7 mg Fe(II) in 27,3 g Wasser. Danach wurde bei einer Temperatur von 30°C über eine Zeitspanne von 20 Minuten eine Lösung von TBHP (1,0 g) in 20,4 g Wasser zugetropft. Nach erreichen der Exothermie wurde noch 4 Stunden bei 50°C nachgerührt. Die dabei entstandene Dispersion hatte folgende Eigenschaften:

| | |
|---|---|
| Feststoffgehalt: | 34,5% |
| Mittlere Teilchengröße:67 nm | |
| pH (10%-ig verdünnt): 8,6 | |
| Viskosität (D=1000 1/s): | 21 mPa.s |
| Stippentest: | 1-2 |

Der Stippentest wurde wie folgt durchgeführt: Zu der enstandenen PUHA (100 g) wurde 300 g Wasser zugegeben und dies wurde über einen schwarzen Filter gegeben. Der dabei auf dem Filter zurückgebliebene Rückstand wurde qualitativ beurteilt mit folgender Benotung:
1: gar kein Rückstand
2. ein paar kleine grobe Partikel
3: Grobe und kleine Partikel
4: Das Filter ist fast vollständig mit weißen Partikeln bedeckt.
5. Das Filter verstoppt direkt.

Eine Benotung 1-2 ist noch akzeptabel.

**Tabelle: Übersicht der Ergebnisse.**

| Beispiel/Art | Polyol Art | Molgewicht Ether | Stippentest |
|---|---|---|---|
| 1 Vgl | Terathane | 250 | Kein PAC möglich |
| 2/Vgl | Terathane | 450 | 3 |
| 3/Erf. | Terathane | 650 | 1-2 |
| 4/Erf. | Terathane | 825 | 1-2 |
| 5/Erf. | Terathane | 1000 | 1-2 |
| 6/Erf.* | Terathane | 1000 | 2 |
| 7/Erf. | LP 112 | 1000 | 1-2 |
| 8/Erf. | Terathane | 1500 | 1-2 |
| 9/Vgl. | Terathane | 2000 | 3 |
| 10/Erf. | Terathane/C2200 | 1000 | 1-2 |

| | | | |
|---|---|---|---|
| *Prepolymer Fahrweise. | | | |

Alle Beispiele haben in etwa den gleichen Gehalt an Hartsegment und die gleiche Säurezahl. Aufgrund der deutlich kürzere Reaktionszeit wird die one-shot Fahrweise bevorzugt.

Das Vergleichsbeispiel 1 beschreibt die Verwendung von Terathane® 250, wobei das Polyurethanharnstoff verstippt ist und gar keine Pfropfung mit Vinylmonomeren ermöglicht.

Das Vergleichsbeispiel 2, beschreibt eine 1:1 molare Mischung aus Terathane® 250 und 650. Das entsprechende Polyurethanpolyharnstoff lässt sich zwar herstellen, das enstprechend gepropfte System ist schlecht filtrierbar.

Die erfindungsgemäße Bespiele 3 bis 8 beschreiben den Einsatz von Terathane® oder LP 112 mit einem zahlenmittleren Molekulargewicht 650 und 1500 g/mol. Die entsprechend gepfropten Systeme sind gut filtierbar. Das gleiche gilt für das Beispiel 10, worin eine Mischung aus T1000 und C2200 eingesetzt wird.

Das Vergleichsbeispiel 9 beschreibt den Einsatz von Terathane® 2000, wobei das entsprechende gepfropfte System einen Belag zeigt.

Die Beispiele zeigen, dass ein gut filtrierbares gepfropte System nur möglich ist wenn Etherpolyole eingesetzt werden, die ein mittleres Molekulargewicht haben zwischen 650 und 1500 g/mol.

## Patentansprüche

1. Verfahren zur Herstellung von wässrigen Dispersionen enthaltend Polyurethanpolyacrylate, wobei in einem ersten Schritt
ein NCO-Prepolymer bestehend aus
ai) 20 bis 60 Gew.-% wenigstens eines Diisocyanates,
aii) 20-80 Gew.-% wenigstens eines Polyetherdiols mit einem zahlenmittleren Molekulargewicht von 600 bis 1600 g/mol,
aiii) 0 bis 30 g Gew.-% wenigstens eines Polymerdiols ausgewählt aus der Gruppe bestehend aus Polyesterpolyolen und Polycarbonatdiolen jeweils mit einem zahlenmittleren Molekulargewicht von 500 bis 3000 g/mol
aiv) 2 bis 12 Gew.-% wenigstens einer 2,2-Bis-(hydroxymethyl)-alkanmonocarbonsäure,
av) 0,1 bis 15 Gew.-% wenigstens eines hydroxyfunktionellen ethylenisch ungesättigten Monomers,
avi) 0 bis 15 Gew.-% wenigstens eines kurzkettigen Diols mit einem zahlenmittleren Molekulargewicht von 62 bis 400 g/mol,
avii) 0 bis 10 Gew-.% wenigstens eines tri- oder höherfunktionellen Alkohols mit einem zahlenmittleren Molekulargewicht von 62 bis 400 g/mol und
aviii) 0 bis 10 Gew.-% wenigstens eines monofunktionellen Alkohols mit einem zahlenmittleren Molekulargewicht von 32 bis 3500 g/mol,
mit
b) 0 bis 15 Gew.-% wenigstens eines Diamins mit einem zahlenmittleren Molekulargewicht von 60 bis 300 g/mol,
c) 0 bis 10 Gew.-% wenigstens eines monofunktionellen Amins mit einem zahlenmittleren Molekulargewicht von 32 bis 350 g/mol,
d) 0 bis 10 Gew.-% wenigstens eines tri- oder höherfunktionelle Amins mit einem zahlenmittleren Molekulargewicht von 60 bis 300 g/mol und
f) 0,1 bis 10 Gew.-% wenigstens eines Neutralisationsmittels
zu einem Polyurethan umgesetzt wird,
wobei sich die genannten Prozentangaben a) bis e) zu 100 % ergänzen,
und im zweiten Schritt ethylenisch ungestättigte Monomere f) zugegeben werden, wobei das Massenverhältnis der Summer der Masse der Monomere a) bis e) zur Masse des Monomers f) im Bereich zwischen 90:10 zu 10:90 liegt.

2. Verfahren gemäß Anspruch 1, wobei das Massenverhältnis der Summer der Masse der Monomere a) bis e) zur Masse des Monomers f) im Bereich zwischen 40:60 zu 90:10 liegt.

3. Verfahren gemäß Anspruch 1, wobei das Polyetherdiol ein zahlenmittleres Molekulargewicht im Bereich von 650 bis 1500 g/mol aufweist.

4. Verfahren gemäß Anspruch 1, wobei die Umsetzung im zweiten Schritt in Anwesenheit von Initiatoren h) ausgewählt aus der Gruppe bestehend aus Ammoniumpersulfat, organischen Peroxiden und Azoverbindungen erfolgt.

5. Verfahren gemäß Anspruch 1, wobei die Umsetzung im zweiten Schritt in Anwesenheit von Redoxsystemen erfolgt.

6. Verfahren gemäß Anspruch 1, wobei die Komponente aii) bis aviii) gemischt werden und durch Zugabe mit ai) (one-shot-Verfahren) zu umgesetzt werden.

7. Wässrige Dispersionen erhältlich nach einem Verfahren gemäß den Ansprüchen 1 bis 6.

8. Beschichtungsmittel enthaltend eine wässrige Dispersion gemäß Anspruch 7 oder erhältlich nach einem Verfahren gemäß den Ansprüchen 1 bis 6.

9. Verwendung einer wässrigen Dispersion nach Anspruch 7 für die Beschichtung von Holz, Metall, Kunststoff, Papier, Leder, Textilien, Filz, Glas oder mineralische Untergründen.

10. Verwendung eines Beschichtungsmittels nach Anspruch 8 für die Beschichtung von Holz, Metall, Kunststoff, Papier, Leder, Textilien, Filz, Glas oder mineralische Untergründen.
